# EUROPÄISCHE PATENTANMELDUNG

(11) **EP 4 062 742 A1**
(43) Veröffentlichungstag der Anmeldung: **28.09.2022**
(21) Anmeldenummer: 21209448.6
(22) Anmeldetag: 22.11.2021
(51) Int. Cl.: A01D 61/00, A01D 61/02

(54) **BANDSCHNEIDWERK**

(30) Priorität: 23.03.2021 DE 102021107187
(71) Anmelder: CLAAS Selbstfahrende Erntemaschinen GmbH, 33428 Harsewinkel (DE)
(72) Erfinder: Füchtling, Christian, 48317 Drenstein Rinkerode (DE)
(74) Vertreter: CLAAS Gruppe

(57) **Zusammenfassung**

Die vorliegende Erfindung betrifft ein Bandschneidwerk (1), umfassend
- ein Mittensegment (3) und zwei Seitensegmente (4), jeweils mit einem Rahmen (2),
- einen flexiblen Messerbalken (6), welcher an schwenkbar an den Rahmen (2) angelenkten Tragarmen (12) angeordnet ist,
- sowie hinter dem Messerbalken (6) angeordnete Fördervorrichtungen (5), die endlos umlaufende Förderbänder (7) umfasst,
wobei die jeweilige Fördervorrichtung (5) eine erste am Mittensegment (3) angeordnete Umlenkrolle und eine zweite endseitig am jeweiligen Seitensegment (4) angeordnete Umlenkrolle umfasst, um die das endlose Förderband (7) umläuft, wobei die beiden Seitensegmente (4) jeweils durch ein Rahmengelenk (15) um eine im Wesentlichen horizontal verlaufende Schwenkachse (14) schwenkbar mit dem Mittensegment (3) verbunden sind, wobei das jeweilige Seitensegment (4) eine Bandführungseinheit (19) mit einer Führungsrolle (20) aufweist, welche um eine zur Schwenkachse (14) parallele Achse (21) drehbar ist, wobei die Bandführungseinheit (19) um eine zur Drehachse (22) der Tragarme (17) koaxiale Schwenkachse (23) an dem Rahmen (2) angeordnet ist.

## Beschreibung

Die vorliegende Erfindung betrifft ein Bandschneidwerk gemäß dem Oberbegriff des Anspruches 1.

Ein Bandschneidwerk gemäß dem Oberbegriff des Anspruches 1 ist aus der DE 10 2013 100 322 A1 bekannt.

Aus der EP 3 420 796 B1 ist ein Bandschneidwerk bekannt, welches ein Mittensegment aufweist, an dem zwei Seitensegmente jeweils durch ein Rahmengelenk um eine normal zur Längsachse des Bandschneidwerks im Wesentlichen horizontal verlaufende Schwenkachse schwenkbar mit dem Mittensegment verbunden sind, wobei das Mittensegment und die Seitensegmente einen segmentierten Rahmen aufweisen. An dem Mittensegment ist jeweils eine erste Umlenkrolle angeordnet und an dem Seitensegment ist eine zweite Umlenkrolle diametral zur ersten Umlenkrolle angeordnet, um die ein Förderband endlos umläuft. Zur Bandführung in der Knickstelle, die sich in dem Bereich der horizontalen Schwenkachse befindet, ist eine dritte Rolle koaxial zur horizontalen Schwenkachse angeordnet. Das Schwenken der seitlichen Segmente in vertikaler Richtung um die horizontale Schwenkachse erhöht die Flexibilität bei der Anpassung des Bandschneidwerks an Änderungen im Bodenverlauf, wodurch eine größere Arbeitsbreite darstellbar ist. Im Bereich der Knickstellen kommt es, je nach Richtung der Schwenkbewegung des Seitensegmentes, zu Auslenkungen des Förderbandes, die zu einem Abheben des Förderbandes führen können, wodurch die Abdichtung im Bereich der Abhebung nicht sichergestellt ist. Darüber hinaus kann es aufgrund der Auslenkung zu einer Überbelastung des Förderbandes kommen, was mit erhöhtem Verschleiß einhergeht.

Ausgehend vom vorstehend genannten Stand der Technik liegt der Erfindung die Aufgabe zugrunde, ein Bandschneidwerk gemäß der DE 10 2013 100 322 A1 weiterzubilden, welches bei zunehmender Arbeitsbreite die notwendige Flexibilität bei der Anpassung des Bandschneidwerks an Änderungen im Bodenverlauf aufweist und dabei die Nachteile des Standes der Technik hinsichtlich der Bandführung vermeidet.

Diese Aufgabe wird durch ein Bandschneidwerk gemäß dem Oberbegriff des Anspruches 1 in Verbindung mit den kennzeichnenden Merkmalen des Anspruches 1 gelöst. Vorteilhafte Weiterbildungen sind Gegenstand der Unteransprüche.

Gemäß dem Anspruch 1 wird ein Bandschneidwerk vorgeschlagen, umfassend ein Mittensegment und zwei Seitensegmente, jeweils mit einem Rahmen, einem flexiblen Messerbalken, welcher an schwenkbar an den Rahmen angelenkten Tragarmen angeordnet ist, sowie hinter dem Messerbalken angeordnete Fördervorrichtungen, die als endlos umlaufende Förderbänder ausgeführt sind, welche von in einer zu den Tragarmen parallel verlaufenden Ebene an den Rahmen schwenkbar angelenkten Tragelemente getragen werden, wobei die jeweilige Fördervorrichtung eine erste Umlenkrolle, die am Mittensegment angeordnet ist, und eine zweite Umlenkrolle, die endseitig am jeweiligen Seitensegment angeordnet ist, umfasst, um die das Förderbandband umläuft. Erfindungsgemäß ist vorgesehen, dass die beiden Seitensegmente jeweils durch ein Rahmengelenk um eine normal zur Längsachse des Bandschneidwerks im Wesentlichen horizontal verlaufende Schwenkachse schwenkbar mit dem Mittensegment verbunden sind, wobei das jeweilige Seitensegment eine Bandführungseinheit mit einer Führungsrolle aufweist, welche um eine zur Schwenkachse parallele Achse drehbar im Bereich des Rahmengelenks positioniert ist, wobei die Bandführungseinheit um eine zur Drehachse der Tragarme koaxiale Schwenkachse an dem Rahmen angeordnet ist. Insbesondere bei einer Bewegung des jeweiligen Seitensegments in Richtung Boden übernimmt die Führungsrolle die Führung des Förderbandes im Bereich der Knickstelle. Dadurch wird erreicht, dass das Förderband den unstetigen Knickstellenbereich passieren kann, ohne dabei die Führung zu verlieren bzw. beschädigt zu werden.

Vorteilhaft ist es, wenn die jeweilige Bandführungseinheit mit ihrem der Schwenkachse abgewandten Ende mit dem Messerbalken verbunden ist. Durch die Anbindung der Bandführungseinheit im vorderen Bereich an den Messerbalken wird erreicht, dass die schwimmenden Ausgleichsbewegungen des Messerbalkens aufgrund von sich ändernder Bodenkontur auf die Bandführungseinheit übertragbar sind.

Insbesondere kann die Bandführungseinheit am Rahmen des Mittensegments angeordnet sein. Dies ist insbesondere bei einer vertikalen Auslenkung des Seitensegments nach unten in Richtung Boden vorteilhaft, damit die Führung des Förderbandes erhalten bleibt.

Bevorzugt kann auf den Tragarmen der Seitensegmente benachbart zum Rahmen zumindest ein unteres Bandführungselement angeordnet sein, welches sich unterhalb des umlaufenden Förderbandes parallel zu diesem erstreckt. Das zumindest eine untere Bandführungselement dient dazu, zu verhindern, dass Auslenkungen der zu den Tragarmen relativbeweglichen Tragelemente in vertikaler Richtung zu einem Abheben des Förderbandes führen. Das zumindest eine untere Bandführungselement ist an der Oberseite der Tragarme befestigt.

Dabei kann sich das zumindest eine untere Bandführungselement im Wesentlichen über einen Bereich zwischen der ersten Umlenkrolle und der zweiten Umlenkrolle entlang der den Tragarmen zugewandten Unterseite des Förderbandes erstrecken.

Insbesondere kann das untere Bandführungselement aus mehreren Einzelsegmenten bestehen, die im Wesentlichen in Längsrichtung des Bandschneidwerks fluchtend auf den Tragarmen hintereinander angeordnet sind. Besonders bevorzugt erstreckt sich ein unteres Bandführungselement im Bereich der Knickstelle ausgehend von einem zur Knickstelle benachbarten Tragarm abschnittsweise in Richtung des benachbarten Tragarmes, zwischen denen die Bandführungseinheit angeordnet ist.

Weiterhin kann die Bandführungseinheit einen oberhalb der Führungsrolle angeordneten Niederhalter umfassten, welcher dem umlaufenden Förderband außenseitig zugewandt und dieses abschnittsweise überlappend angeordnet ist.

Gemäß einer bevorzugten Ausführung kann der Niederhalter eine Längsausdehnung aufweisen, mit der sich der Niederhalter ausgehend von der Achse abschnittsweise nur in Richtung des Mittensegments oberhalb des Förderbandes erstreckt. Unter der Längsausdehnung ist eine entlang der Längsachse des Bandschneidwerks verlaufende Erstreckung des Niederhalters zu verstehen.

Hierbei kann der Niederhalter aus einem im Wesentlichen starren Material bestehen. Der aus einem starren Material bestehende Niederhalter verhindert ein Abheben des Förderbandes im Bereich der Knickstelle.

Gemäß einer bevorzugten Ausführung kann der Niederhalter eine Längsausdehnung aufweisen, mit der sich der Niederhalter ausgehend von der Achse der Führungsrolle abschnittsweise in Richtung des Mittensegments und des Seitensegments oberhalb des Förderbandes erstreckt.

Hierbei kann der Niederhalter aus einem im Wesentlichen flexiblen Material bestehen, welches geeignet ist, sich bei einer Auslenkung des Förderbandes an die auftretende Kontur anzupassen. Durch die vorhandene Flexibilität des Niederhalters lässt sich ein sehr weicher Übergang generieren, wodurch der Verschleiß des Förderbandes im Bereich der Knickstelle minimiert wird.

Gemäß einer bevorzugten Ausführung kann die Bandführungseinheit mittels einer Konsole schwenkbar an dem Rahmen angelenkt sein. In der Konsole kann ein Ende der Rolle drehbar gelagert sein. Die Konsole ist um die zur Drehachse der Tragarme koaxiale Schwenkachse an dem Rahmen angeordnet. Hierzu kann in einer Ebene unterhalb der Führungsrolle ein rahmenförmiges Halteelement am Rahmen angeordnet sein, an oder in welchem die Konsole angelenkt ist, welche die Bandführungseinheit trägt.

Bevorzugt kann an der Konsole ein sich parallel zur Führungsrolle erstreckender Ausleger angeordnet sein, der bis unter das zumindest eine untere Bandführungselement ragt. Das zumindest eine untere Bandführungselement kann sich auf dem Ausleger abstützen. Der Ausleger kann zumindest einarmig ausgeführt sein. Vorzugsweise ist der Ausleger zweiarmig ausgeführt.

Weiterhin kann am freien Ende des Auslegers zumindest ein Bolzen angeordnet sein, welcher relativ zum Ausleger höhenverstellbar ist, auf dem sich ein an der Unterseite des unteren Bandführungselementes angeordnetes Führungselement abstützt. Das sich im Wesentlichen senkrecht zum unteren Bandführungselement erstreckende Führungselement kann dazu dienen, bei einer Auslenkung des Seitenabschnitts die Bewegung des zumindest eine unteren Bandführungselementes in vertikaler Richtung zu begrenzen. Die Bolzen am freien Ende des Auslegers dienen dabei als Anschlag für das Führungselement. Bei einem Verschwenken des Seitensegmentes in Richtung Boden kann das zumindest eine Führungselement dem zumindest einen unteren Bandführungselement im Bereich der Führungsrolle eine definierte Verformung aufzwingen, die dem Knickverlauf des Förderbandes folgt. Dadurch wird ein Ablösen des Förderbandes verhindert. Der Grad der Verformung im Knickstellenbereich lässt sich durch den zumindest einen höhenverstellbaren Bolzen verändern.

Insbesondere kann der Niederhalter am Rahmen des Mittensegments und/oder des jeweiligen Seitensegments befestigt sein.

Die vorliegende Erfindung wird nachstehend anhand eines in den Zeichnungen dargestellten Ausführungsbeispieles näher erläutert.

Es zeigen:
- Fig. 1: eine schematische Ansicht eines Bandschneidwerkes
- Fig. 2: eine perspektivische Teilansicht des Bandschneidwerkes gemäß Fig. 1;
- Fig. 3: eine perspektivische Teilansicht des Bandschneidwerkes gemäß Fig. 2 von hinten;
- Fig. 4: eine perspektivische Teilansicht einer Knickstelle des Bandschneidwerkes;
- Fig. 5: eine perspektivische Teilansicht eines Mittensegments und der Knickstelle gemäß Fig. 4.
- Fig. 6: eine perspektivische Teilansicht der Knickstelle zwischen dem Mittensegment und einem Seitensegment von unten;
- Fig. 7: eine perspektivische Teilansicht der Knickstelle am Mittensegment von schräg oben;
- Fig. 8: eine perspektivische Teilansicht der Knickstelle am Mittensegment von schräg oben mit einem Niederhalter gemäß einer weiteren Ausführungsform; und
- Fig. 9: eine perspektivische Ansicht einer Bandführungseinheit.

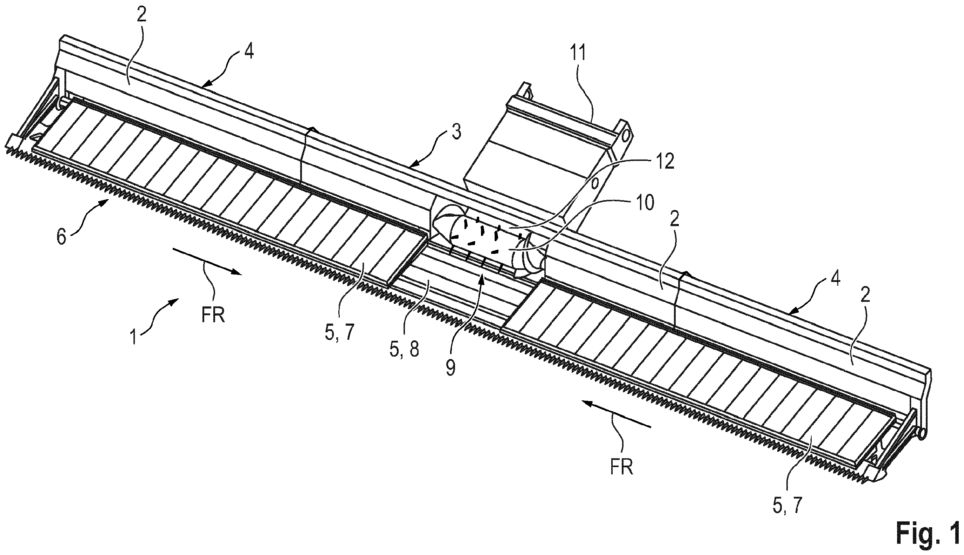

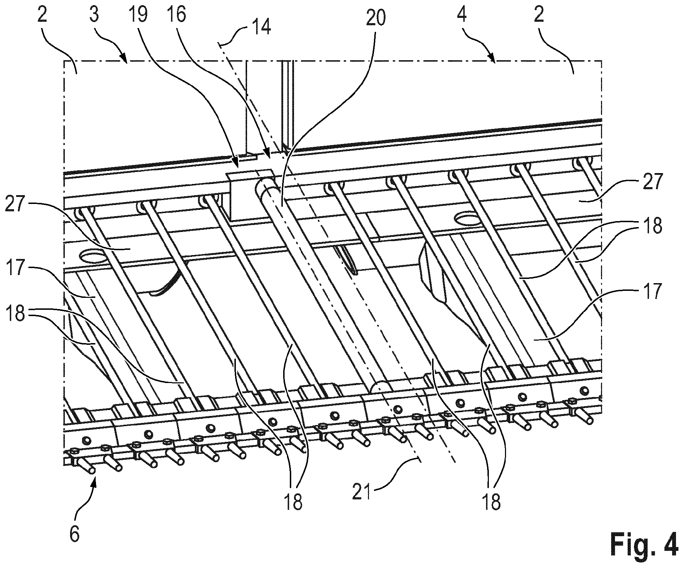

Fig. 1 zeigt eine schematische Darstellung eines Bandschneidwerkes 1. Das Bandschneidwerk 1 umfasst ein Mittensegment 3 und zwei Seitensegmente 4, jeweils mit einem Rahmen 2. Der Rahmen 2 ist segmentiert ausgeführt. Weiterhin umfasst das Bandschneidwerk 1 einen flexiblen Messerbalken 6, welcher an schwenkbar an den Rahmen 2 angelenkten Tragarmen 17 angeordnet ist und sich im Wesentlichen über die gesamte Breite des Bandschneidwerks 1 erstreckt. Hinter dem Messerbalken 6 sind Fördervorrichtungen 5 angeordnet, die als endlos umlaufende Bänder 7 ausgeführt sind. In einer zu den Tragarmen 17 parallel verlaufenden Ebene sind Tragelemente 18 an den Rahmen 2 schwenkbar angelenkt, welche die umlaufenden Bänder 7 tragen, wie in Fig. 4 beispielhaft dargestellt ist.

Die jeweilige Fördervorrichtung 7 umfasst eine erste Umlenkrolle, die am Mittensegment 3 angeordnet ist und eine zweite Umlenkrolle, die endseitig am jeweiligen Seitensegment 4, diametral zur ersten Umlenkrolle, angeordnet ist, um die das Förderband 7 endlos umläuft. Die endlos umlaufenden Förderbänder 7 erstrecken sich abschnittsweise bis auf das Mittensegment 3, um von dem Messerbalken 6 abgeschnittenes Erntegut seitwärts in Richtung des Mittensegments 3 zu transportieren, was durch Pfeile FR veranschaulicht ist, und das Erntegut einer Einzugsvorrichtung 9 zuzuführen. Das Mittensegment 3 umfasst ebenfalls eine als zumindest ein endlos umlaufendes Förderband 8 ausgebildete Fördervorrichtung 5. Das zumindest eine Förderband 8 fördert dabei quer zur Förderrichtung FR der Förderbänder 7 der Seitensegmente 4. Andere Ausgestaltungen der Fördervorrichtung 5 im Bereich des Mittensegments 3 sind denkbar. Die Einzugsvorrichtung 9 ist als eine antreibbare Einzugswalze 10 ausgeführt. Die Einzugsvorrichtung 9 führt das von den endlos umlaufenden Förderbändern 7 dem Mittensegment 3 seitlich zugeführte Erntegut einer in dem Rahmen 2 des Mittensegments 3 vorgesehenen, hinter der Einzugswalze 10 befindlichen Öffnung 12 zu, durch welche das Erntegut durch einen an einem nicht dargestellten Mähdrescher befindlichen Einzugskanal 11, an dem das Bandschneidwerk 1 lösbar befestigt ist, dem Mähdrescher zur weiteren Verarbeitung zugeführt wird.

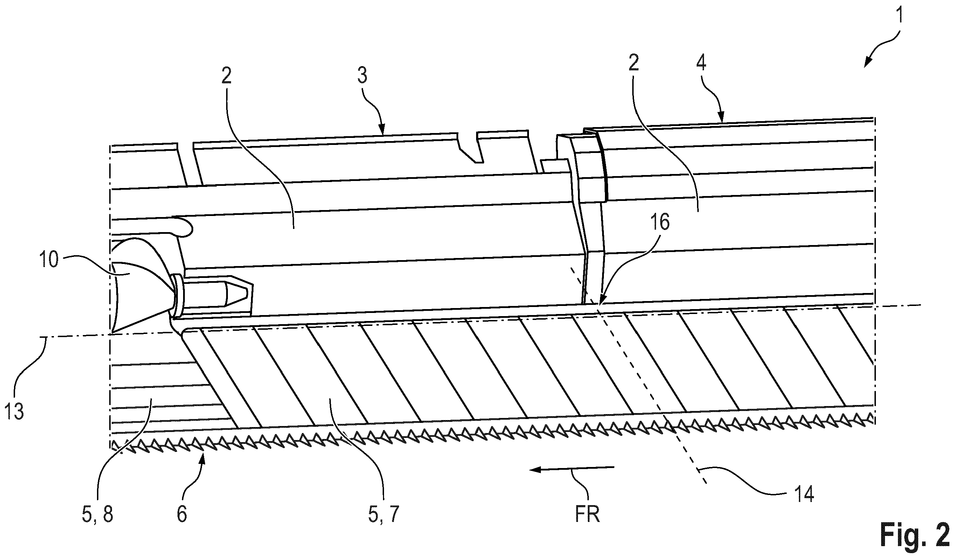

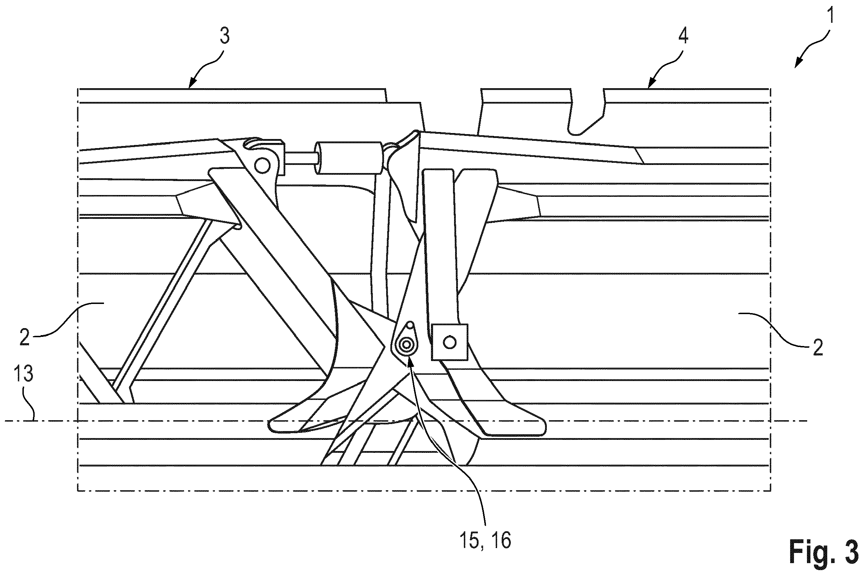

In Fig. 2 ist eine perspektivische Teilansicht des Bandschneidwerkes 1 gemäß Fig. 1 dargestellt. Fig. 3 zeigt eine Ansicht des Bandschneidwerkes 1 gemäß Fig. 2 von hinten. Die Seitensegmente 4 sind jeweils durch ein Rahmengelenk 15, wie in Fig. 3 dargestellt, mit dem Mittensegment 3 um eine normal zur Längsachse 13 des Bandschneidwerks 1 im Wesentlichen horizontal verlaufende Schwenkachse 14 schwenkbar verbunden. Die beiden Seitensegmente 4 sind identisch aufgebaut und spiegelbildlich einander gegenüberliegend an dem Mittensegment 3 mittels der Rahmengelenke 15 angeordnet. Im Bereich der Schwenkachse 14 des Rahmengelenks 15 bildet sich eine Knickstelle 16 des Bandes 7.

In Fig. 4 ist eine perspektivische Teilansicht der Knickstelle 16 zwischen dem Mittensegment 3 und einem der Seitensegmente 4 des Bandschneidwerkes 1 dargestellt. Um zu vermeiden, dass sich in dieser Knickstelle 16 das Förderband 7 von den Tragelementen 18 aufgrund einer Schwenkbewegung des Seitensegments 4 beabstanden kann, wodurch sich ein Spalt ausbilden würde, ist eine Bandführungseinheit 19 vorgesehen. Die Bandführungseinheit 19 umfasst eine Führungsrolle 20, welche um eine zur Schwenkachse 14 parallele Achse 21 drehbar im Bereich des Rahmengelenks 15 positioniert ist.

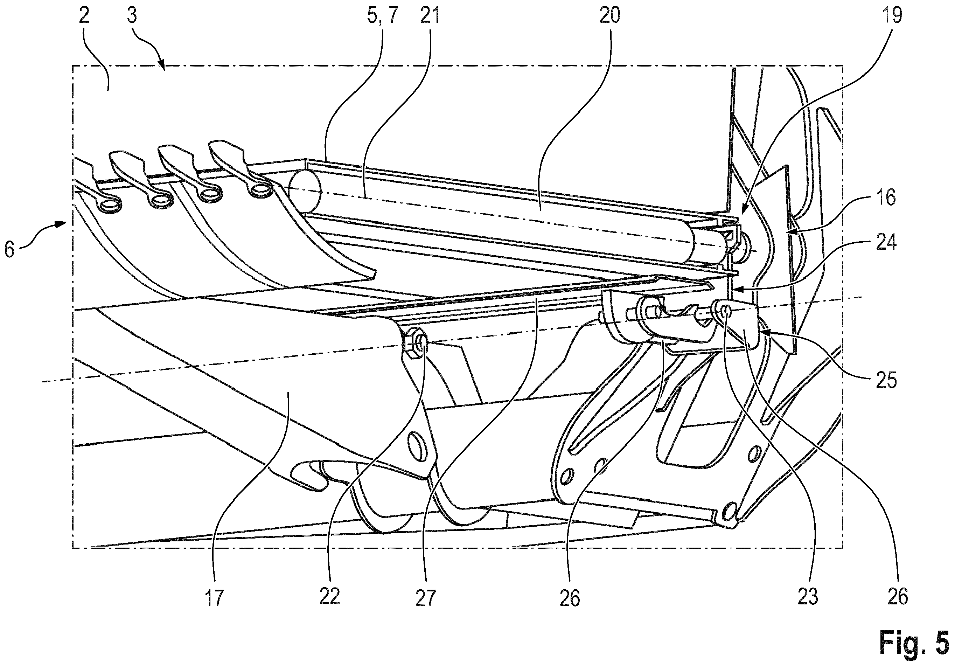

In Fig. 5 ist eine perspektivische Teilansicht des Mittensegments 3 und der Knickstelle 16 gemäß Fig. 4 dargestellt. Die Bandführungseinheit 19 ist um eine zur Drehachse 22 der Tragarme 17 koaxiale Schwenkachse 23 an dem Rahmen 2, insbesondere des Mittensegments 3, angeordnet. Insbesondere bei einer Bewegung des jeweiligen Seitensegments 4 in Richtung Boden übernimmt die Führungsrolle 20 die Führung des Förderbandes 7 im Bereich der Knickstelle 16. Dadurch wird erreicht, dass das endlos umlaufende Förderband 7 den unstetigen Knickstellenbereich passieren kann, ohne dabei die Führung zu verlieren bzw. beschädigt zu werden.

Die Bandführungseinheit 19 ist mittels einer Konsole 24 an dem Rahmen 2, hier und vorzugsweise an dem Rahmen 2 des Mittensegments 3, angelenkt. Damit sich die Bandführungseinheit 19 den Bewegungen des flexiblen Messerbalkens 6 anpassen kann, ist die Bandführungseinheit 19 im hinteren Bereich durch die Konsole 24 getragen, die um die koaxial zur Drehachse 22 der Tragarme 17 des Messerbalkens 6 verlaufende Schwenkachse 23 schwenkbar ist. Die Anbindung der Konsole erfolgt mittels eines Halteelements 25. Das im Wesentlichen U-förmige Halteelement 25 weist zwei Schenkel 26 auf, zwischen denen die Schwenkachse 23 sowie die Konsole 24 angeordnet sind.

Die jeweilige Bandführungseinheit 19 ist mit ihrem der Schwenkachse 23 abgewandten Ende mit dem Messerbalken 6 verbunden. Durch die Anbindung der Bandführungseinheit 19 im vorderen Bereich an den Messerbalken 6 wird erreicht, dass die Bandführungseinheit 19 die schwimmenden Auslenkbewegungen des Messerbalkens 6 infolge der Anpassung an die jeweilige Bodenkontur übernimmt.

Weiterhin zeigt die Darstellung in Fig. 5 ein unteres Bandführungselement 27. Das untere Bandführungselement 27 ist auf den Tragarmen 17 der Seitensegmente 4 benachbart zum Rahmen 2 angeordnet. Das untere Bandführungselement 27 erstreckt sich unterhalb des endlos umlaufenden Bandes 7, auf der dem Band 7 zugewandten Seite der Tragarme 17, parallel zu diesem. Das zumindest eine untere Bandführungselement 27 kann sich im Wesentlichen über einen Bereich zwischen der ersten Umlenkrolle und der zweiten Umlenkrolle der Fördervorrichtung 5 erstrecken. Dabei kann das untere Bandführungselement 27 aus mehreren Einzelsegmenten bestehen, die im Wesentlichen in Längsrichtung fluchtend auf den Tragarmen 17 hintereinander angeordnet sind. Wie aus Fig. 4 ersichtlich, erstreckt sich ein unteres Bandführungselement 27 im Bereich der Knickstelle 16 ausgehend von einem zur Knickstelle 16 benachbarten Tragarm 17 des Mittenabschnitts 3 abschnittsweise in Richtung des benachbarten Tragarmes 17 am Seitenabschnitt 4, zwischen denen die Bandführungseinheit 19 angeordnet ist. Das nachfolgende untere Bandführungselement 27 ist dabei zu dem vorangehenden unteren Bandführungselement 27 relativbeweglich.

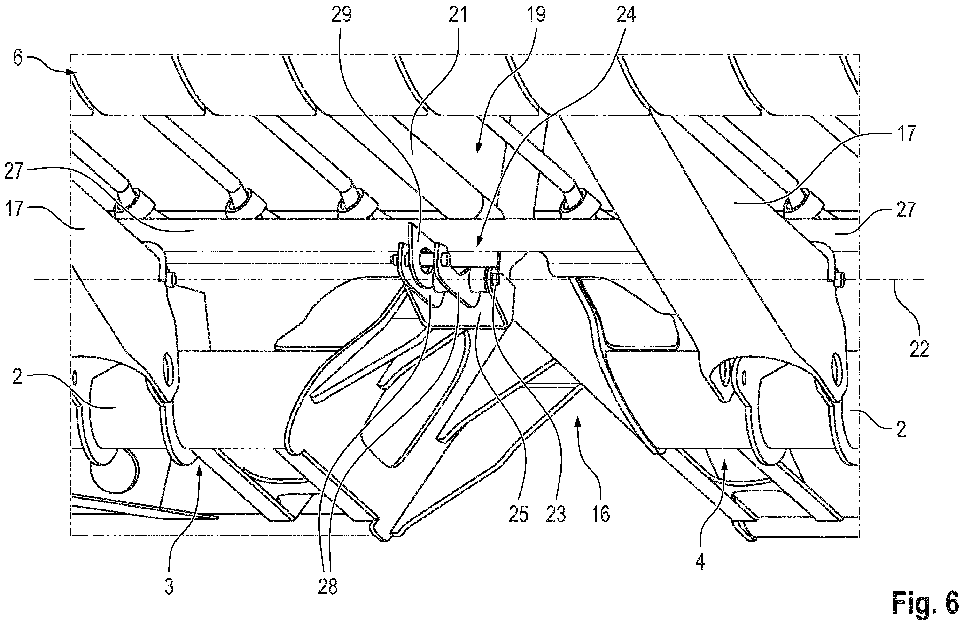

In Fig. 6 ist eine perspektivische Teilansicht der Knickstelle 16 zwischen dem Mittensegment 3 und einem Seitensegment 4 von unten dargestellt. Das die Konsole 24 aufnehmende Halteelement 25 ist am Rahmen 2 angeschraubt. An der Konsole 24 ist ein sich parallel zur Führungsrolle 20 erstreckender Ausleger 28 angeordnet ist, der zumindest bis unter das untere Bandführungselement 27 ragt. Der Ausleger 28 kann einarmig oder, wie im Ausführungsbeispiel dargestellt zweiarmig ausgeführt sein. Am freien Ende des Auslegers 28 ist ein Führungselement 29 angeordnet ist, welches relativ zum Ausleger 28 höhenverstellbar ausgeführt ist. Das Führungselement 29 ist an der Unterseite des unteren Bandführungselementes 27 befestigt. Das Führungselement 29 kann dazu dienen, die Bewegung des zumindest eine unteren Bandführungselementes 27 in vertikaler Richtung zu begrenzen. Bei einem Verschwenken des Seitensegmentes 4 in Richtung Boden kann das Führungselement 29 dem unteren Bandführungselement 27 am Mittenabschnitt 3 im Bereich der Führungsrolle 20 eine definierte Verformung aufzwingen, die dem Knickverlauf des Förderbandes 7 folgt. Dadurch wird ein Ablösen des Förderbandes 7 verhindert.

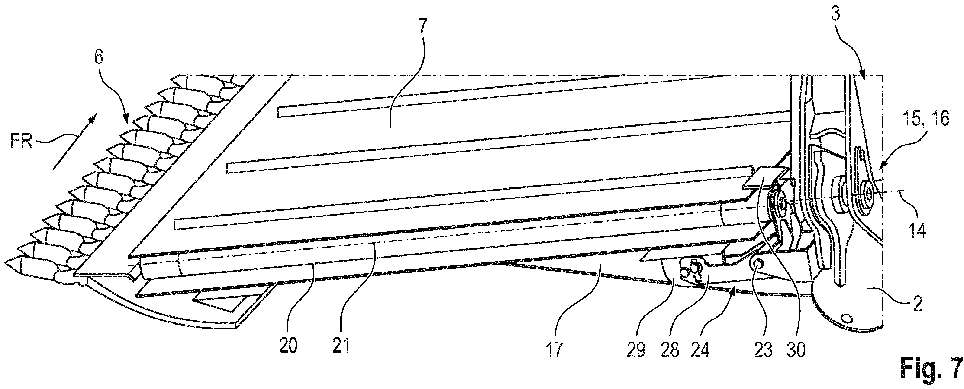

Fig. 7 zeigt eine perspektivische Teilansicht der Knickstelle 16 am Mittensegment 3 von schräg oben. Die Bandführungseinheit 19 umfasst einen oberhalb der Führungsrolle 20 angeordneten Niederhalter 30, welcher dem umlaufenden Förderband 7 außenseitig zugewandt und dieses abschnittsweise überlappend angeordnet ist. Der Niederhalter 30 ist am Rahmen des Mittenabschnitts 3 angeordnet. Der Niederhalter 30 weist eine Längsausdehnung auf, mit der sich der Niederhalter 30 ausgehend von der Achse 21 der Führungsrolle 20 abschnittsweise nur in Richtung des Mittensegments 3 oberhalb des Förderbandes 7 erstreckt. Dem Niederhalter 30 kommt die Funktion zu, das Abheben des Förderbands 7 beim Schwenken des Seitensegments 4 nach oben zu verhindern. Bei dieser kurzen Ausführungsform des Niederhalter 30 wird das Förderband 7 nur im Bereich des feststehenden Rahmens 2 des Mittensegments 3 niedergehalten. Hierzu ist der Niederhalter 30 aus einem starren Material ausgeführt.

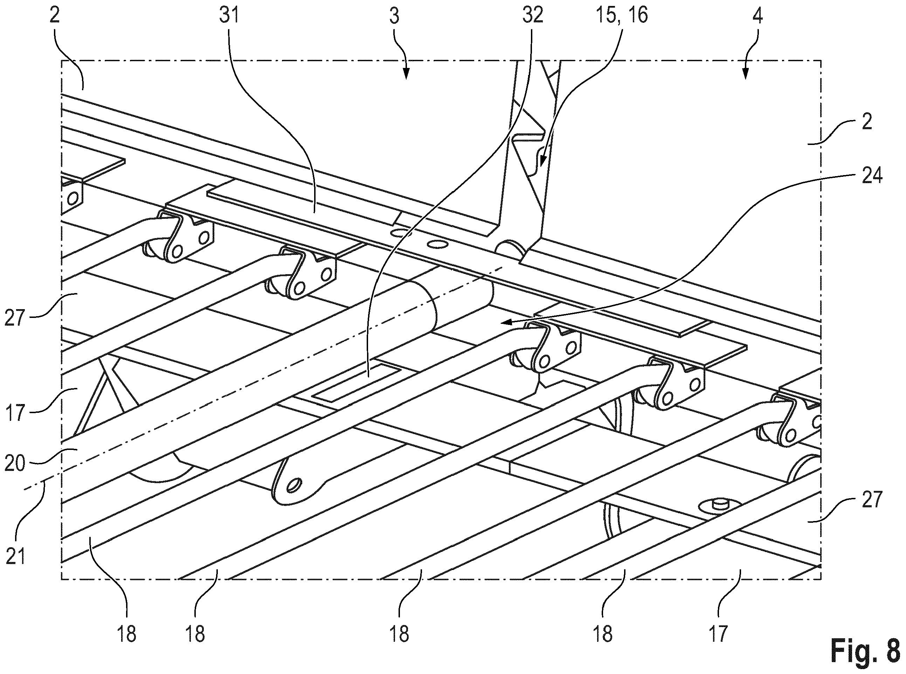

Die Darstellung in Fig. 8 zeigt eine perspektivische Teilansicht der Knickstelle 16 zwischen dem Mittensegment 3 und dem Seitensegment 4 von schräg oben mit einem Niederhalter 31 gemäß einer weiteren Ausführungsform. Der Niederhalter 31 gemäß der zweiten Ausführungsform ist lang ausgeführt. Der Niederhalter 31 weist eine Längsausdehnung auf, mit der sich der Niederhalter 31 ausgehend von der Achse 21 abschnittsweise in Richtung des Mittensegments 3 und des Seitensegments 4 oberhalb des Förderbandes 7 erstreckt. Bei dieser Ausführung kann der Niederhalter 31 sowohl am Rahmen 2 des Mittensegments 3 als auch des Seitensegments 4 befestigt sein. Dabei kann der Niederhalter 31 bevorzugt aus einem im Wesentlichen flexiblen Material bestehen, welches geeignet ist, sich bei einer Auslenkung des Förderbandes 7 an die auftretende Kontur anzupassen Durch die vorhandene Flexibilität des Niederhalters 31 lässt sich ein sehr weicher Übergang generieren, wodurch der Verschleiß des Förderbandes 7 minimiert wird. Weiterhin zeigt die Darstellung in Fig. 8 einen Anbindungsbereich 32 des an dem zumindest einen unteren Bandführungselement 27 untenseitig angeordneten Führungselementes 29. Das Führungselement 29 ist im Wesentlichen vertikal fluchtend zur Achse 21 der Führungsrolle 20 angeordnet.

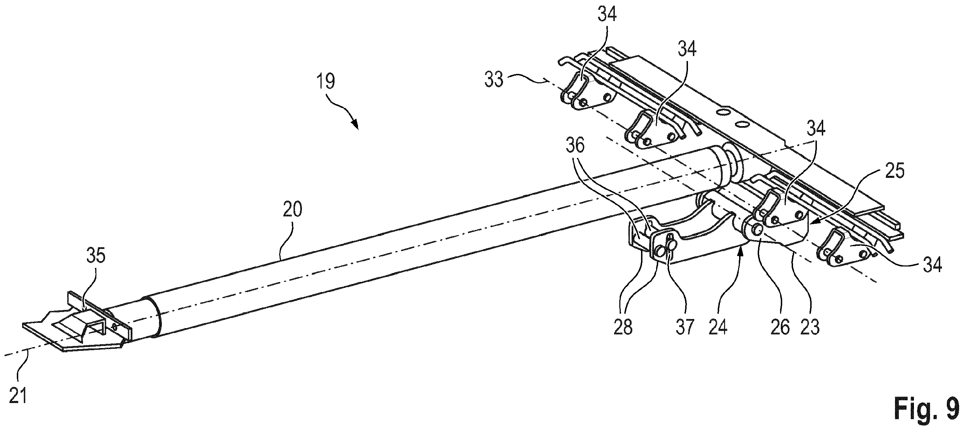

Fig. 9 zeigt eine perspektivische Ansicht der Bandführungseinheit 19. Mit 34 sind Anlenkpunkte der Tragelemente 18 bezeichnet, die um eine separate Schwenkachse 33 unabhängig von den Tragarmen 17 schwenkbar sind. Am vorderen freien Ende der Führungsrolle 20 befindet sich ein Befestigungsmittel 35 zur Befestigung am Messerbalken 6. Der zweiarmige Ausleger 28 weist an seinem freien Ende zwei achsparallel angeordnete Bolzen 36 auf, die sich zwischen den Armen des Auslegers 28 erstrecken. Zumindest ein Bolzen 36 ist ein einem Langloch 37 an den freien Enden der Arme des Auslegers 28 höhenverstellbar. Vorzugsweise sind beide Bolzen 36 höhenverstellbar. Die beiden Bolzen 36 bilden Anschläge für das Führungselement 29 an der Unterseite der unteren Bandführung 27. Durch die zwei verstellbaren Bolzen 36 als Anschläge wird erreicht, dass die Bewegung der unteren Bandführung 27 begrenzt wird, wodurch der unteren Bandführung 27 eine definierte Verformung aufgezwungen wird. Der Verformungsgrad lässt sich mittels der höhenverstellbaren Bolzen 36 einstellen.

### Bezugszeichenliste

| | | | |
|---|---|---|---|
| 1 | Bandschneidwerk | 34 | Anlenkpunkt |
| 2 | Rahmen | 35 | Befestigungsmittel |
| 3 | Mittensegment | 36 | Bolzen |
| 4 | Seitensegment | 37 | Langloch |
| 5 | Fördervorrichtung | | |
| 6 | Messerbalken | | |
| 7 | Förderband | | |
| 8 | Förderband | | |
| 9 | Einzugsvorrichtung | | |
| 10 | Einzugswalze | | |
| 11 | Einzugskanal | | |
| 12 | Öffnung | | |
| 13 | Längsachse | | |
| 14 | Schwenkachse | | |
| 15 | Rahmengelenk | | |
| 16 | Knickstelle | | |
| 17 | Tragarm | | |
| 18 | Tragelement | | |
| 19 | Bandführungseinheit | | |
| 20 | Führungsrolle | | |
| 21 | Achse | | |
| 22 | Drehachse | | |
| 23 | Schwenkachse | | |
| 24 | Konsole | | |
| 25 | Halteelement | | |
| 26 | Schenkel | | |
| 27 | Unteres Bandführungselement | | |
| 28 | Ausleger | | |
| 29 | Führungselement | | |
| 30 | Niederhalter | | |
| 31 | Niederhalter | | |
| 32 | Anbindungsbereich | | |
| 33 | Schwenkachse | | |

## Patentansprüche

1. Bandschneidwerk (1), umfassend
- ein Mittensegment (3) und zwei Seitensegmente (4), jeweils mit einem Rahmen (2),
- einen flexiblen Messerbalken (6), welcher an schwenkbar an den Rahmen (2) angelenkten Tragarmen (12) angeordnet ist,
- sowie hinter dem Messerbalken (6) angeordnete Fördervorrichtungen (5), die endlos umlaufende Förderbänder (7) umfassen, welche von in einer zu den Tragarmen (17) parallel verlaufenden Ebene an den Rahmen (2) schwenkbar angelenkten Tragelemente (18) getragen werden,
wobei die jeweilige Fördervorrichtung (5) eine erste am Mittensegment (3) angeordnet Umlenkrolle und eine zweite endseitig am jeweiligen Seitensegment (4) angeordnete Umlenkrolle umfasst, um die das endlose Förderband (7) umläuft, **dadurch gekennzeichnet, dass** die beiden Seitensegmente (4) jeweils durch ein Rahmengelenk (15) um eine normal zur Längsachse (13) des Bandschneidwerks (1) im Wesentlichen horizontal verlaufende Schwenkachse (14) schwenkbar mit dem Mittensegment (3) verbunden sind, wobei das jeweilige Seitensegment (4) eine Bandführungseinheit (19) mit einer Führungsrolle (20) aufweist, welche um eine zur Schwenkachse (14) parallele Achse (21) drehbar im Bereich des Rahmengelenks (15) positioniert ist, wobei die Bandführungseinheit (19) um eine zur Drehachse (22) der Tragarme (17) koaxiale Schwenkachse (23) an dem Rahmen (2) angeordnet ist.

2. Bandschneidwerk (1) nach Anspruch 1, **dadurch gekennzeichnet, dass** die jeweilige Bandführungseinheit (19) mit ihrem der Schwenkachse (23) abgewandten Ende mit dem Messerbalken (6) verbunden ist.

3. Bandschneidwerk (1) nach Anspruch 1 oder 2, **dadurch gekennzeichnet, dass** die Bandführungseinheiten (19) am Rahmen (2) des Mittensegments (3) angeordnet sind.

4. Bandschneidwerk (1) nach einem der Ansprüche 1 bis 3, **dadurch gekennzeichnet, dass** auf den Tragarmen (17) der Seitensegmente (4) benachbart zum Rahmen (2) zumindest ein unteres Bandführungselement (27) angeordnet ist, welches sich unterhalb des umlaufenden Förderbandes (7) parallel zu diesem erstreckt.

5. Bandschneidwerk (1) nach Anspruch 4, **dadurch gekennzeichnet, dass** sich das zumindest eine untere Bandführungselement (27) im Wesentlichen über einen Bereich zwischen der ersten Umlenkrolle und der zweiten Umlenkrolle erstreckt.

6. Bandschneidwerk (1) nach Anspruch 5, **dadurch gekennzeichnet, dass** das untere Bandführungselement (27) aus mehreren Einzelsegmenten besteht, die im Wesentlichen in Längsrichtung fluchtend auf den Tragarmen (17) hintereinander angeordnet sind.

7. Bandschneidwerk (1) nach einem der vorangehenden Ansprüche, **dadurch gekennzeichnet, dass** die Bandführungseinheit (19) einen oberhalb der Führungsrolle (20) angeordneten Niederhalter (30, 31) umfasst, welcher dem umlaufenden Förderband (7) außenseitig zugewandt und dieses abschnittsweise überlappend angeordnet ist.

8. Bandschneidwerk (1) nach Anspruch 7, **dadurch gekennzeichnet, dass** der Niederhalter (30) eine Längsausdehnung aufweist, mit der sich der Niederhalter (30) ausgehend von der Achse (21) der Führungsrolle (20) abschnittsweise nur in Richtung des Mittensegments (3) oberhalb des Förderbandes (7) erstreckt.

9. Bandschneidwerk (1) nach Anspruch 8, **dadurch gekennzeichnet, dass** der Niederhalter (30) aus einem im Wesentlichen starren Material besteht.

10. Bandschneidwerk (1) nach Anspruch 7, **dadurch gekennzeichnet, dass** der Niederhalter (31) eine Längsausdehnung aufweist, mit der sich der Niederhalter (31) ausgehend von der Achse (21) der Führungsrolle (20) abschnittsweise in Richtung des Mittensegments (3) und des Seitensegments (4) oberhalb des Förderbandes (7) erstreckt.

11. Bandschneidwerk (1) nach Anspruch 10, **dadurch gekennzeichnet, dass** der Niederhalter (31) aus einem im Wesentlichen flexiblen Material besteht, welches geeignet ist, sich bei einer Auslenkung des Förderbandes (7) an die auftretende Kontur anzupassen.

12. Bandschneidwerk (1) nach einem der vorangehenden Ansprüche, **dadurch gekennzeichnet, dass** die Bandführungseinheit (19) mittels einer Konsole (24) an dem Rahmen (2) angelenkt ist.

13. Bandschneidwerk (1) nach Anspruch 12, **dadurch gekennzeichnet, dass** an der Konsole (24) ein sich parallel zur Führungsrolle (20) erstreckender Ausleger (28) angeordnet ist, der bis unter das untere Bandführungselement (27) ragt.

14. Bandschneidwerk (1) nach Anspruch 13, **dadurch gekennzeichnet, dass** am freien Ende des Auslegers (28) zumindest ein Bolzen (36) angeordnet ist, welcher relativ zum Ausleger (28) höhenverstellbar ist.

15. Bandschneidwerk (1) nach einem der Ansprüche 12 bis 14, **dadurch gekennzeichnet, dass** der Niederhalter (30, 31) am Rahmen (2) des Mittensegments (3) und/oder des Seitensegments (4) befestigt ist.
